Europäisches Patentamt

European Patent Office

Office européen des brevets

(11) Publication number: **0 075 325**
**B1**

# EUROPEAN PATENT SPECIFICATION

(45) Date of publication of patent specification: **14.12.88**

(51) Int. Cl.⁴: **G 05 B 19/405**

(21) Application number: **82108737.6**

(22) Date of filing: **21.09.82**

(54) Control apparatus and method for industrial robot.

(30) Priority: **22.09.81 JP 149835/81**
**22.09.81 JP 149836/81**

(43) Date of publication of application:
**30.03.83 Bulletin 83/13**

(45) Publication of the grant of the patent:
**14.12.88 Bulletin 88/50**

(84) Designated Contracting States:
**DE FR GB IT NL SE**

(56) References cited:
**FR-A-2 322 693**
**GB-A-2 027 938**
**US-A-3 306 442**
**US-A-4 204 253**
**US-A-4 260 941**

(73) Proprietor: **KABUSHIKI KAISHA SANKYO SEIKI SEISAKUSHO**
**5329, Shimosuwa-machi**
**Suwa-gun Nagano-ken (JP)**

(72) Inventor: **Fujimura, Yukio**
**No. 5467-8, Inabe**
**Ina-shi Nagano (JP)**
Inventor: **Oguchi, Yukio**
**No. 2952, Osachi**
**Okaya-shi Nagano (JP)**
Inventor: **Yasukawa, Kazuyoshi**
**No. 489, Nioshi**
**Ina-shi Nagano (JP)**

(74) Representative: **Henkel, Feiler, Hänzel & Partner**
**Möhlstrasse 37**
**D-8000 München 80 (DE)**

**Description**

BACKGROUND OF THE INVENTION

The present invention relates to an apparatus for controlling an industrial robot.

Japanese Laid-Open Patent Publication No. 52-143661 describes a "Method of Controlling an Industrial Robot". According to the disclosed method, positional errors in an operating pattern are stored as positional difference values, the stored data is compared with basic position data, and an operational position is corrected on the basis of the difference. With such a control method, a teaching unit and a driver unit are integrally incorporated in a control apparatus, which makes the apparatus unavoidably large in size. Since corrective arithmetic operations must be effected for each operational stroke, the correcting program is necessarily lengthy and complex. If a large number of corrections need to be made, the resulting large number of corrective arithmetic operations causes the industrial robot to have a low speed of movement. Also, this arrangement is disadvantageous in that each robot must be provided with a dedicated control apparatus, and the control apparatus must have all of the functions necessary to operate the industrial robot.

In an improvement on that method, control of an industrial robot has been effected by a robot control unit and a separate programming unit. Each industrial robot is provided with a dedicated robot control unit, while a single programming unit, used as an external teaching device, is shared by a plurality of industrial robots. The use of the single programming unit as an external teaching device is effective in practice as it allows the control unit to be small in size, effectively utilized, and less costly. The programming unit is used to store in the robot control unit an operating program, and the robot control unit operates the industrial robot using the stored program.

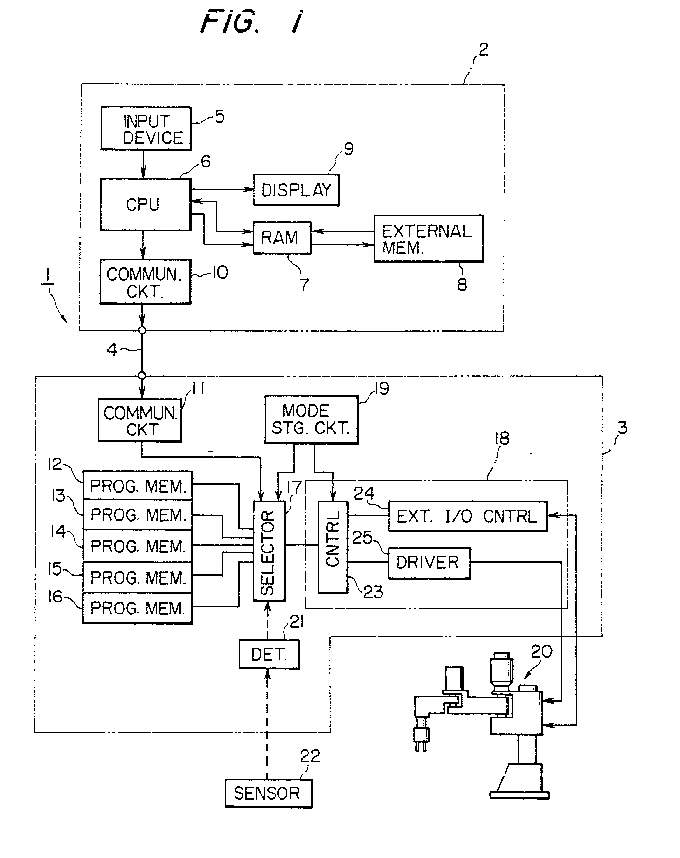

An example of such an improved system is shown and described in United Kingdom Published Patent Application 2,027,938 A. Therein is described a teach-assist apparatus for a programmable industrial robot in which input data representing the positions of the arm of the robot relative to a stationary workpiece is inputted during a teaching operation. An off-line teach-assist computer (reference numeral 34 in Fig. 1 of the Application) computes path data, which is stored in a control memory of an on-line control apparatus which directly operates the manipulator arm. The stored data, which is computed so that the manipulator arm undergoes the most efficient movement, also includes projected workpiece positions in terms of basic linear displacement units, corresponding to possible positions of the workpiece as it moves down an assembly line. During work operations, the position of the workpiece is continuously determined, and data is selected for operating the manipulator arm in accordance with the detected position of the workpiece.

A somewhat similar system is described in Reissue United States Patent 30,016 to Hohn. In that system, which is shown in block diagram form in Fig. 1 of the Reissue Patent, the data stored in an on-line memory does not include projected workpiece positions in terms of basic linear displacement units as in the case of the above-discussed United Kingdom Published Patent Application. Instead, in response to the position of the workpiece, feedback signals are generated which specify the direction and magnitude of a change in position of the workpiece from its expected position. The feedback signals are utilized to modify command signals which are in turn used to operate the manipulator arm servo mechanism circuit.

Industrial robots in use today have multiple functions and are capable of performing not only a single motion but a variety of different motions. However, with a conventional external teaching system, it has been necessary to store a new program in the robot control unit each time a different robot operation is to be performed. For example, if an industrial robot is being used to supply parts to a predetermined location and the location to be supplied with parts is displaced from a reference position beyond an acceptable range, the industrial robot can no longer accurately perform the desired parts supplying operation. The industrial robot thus needs to be taught again, a procedure which is tedious and time-consuming. Because the programming unit can store only a single program in the robot control unit, the robot cannot perform, without reprogramming, all the many functions of industrial robots. There has therefore been a need for a robot control unit capable of storing a plurality of programs and selecting among them freely.

Prior art document US-A-4204253 discloses a robot control apparatus for use in manufacturing machines such as a welding machine or a cutting machine. In this apparatus, the parameters of one user program stored in a machine control system can be chosen by an operator by means of an outer program panel, and further a user program can be prepared by using a program library or program blocks which are stored in the machine control system.

Further, prior art document US-A-3306442 describes a multi-program apparatus for selectively handling articles. In this apparatus program means control a drive mechanism and an article holder to effect predetermined correlated three-dimensional movements of this article holder so that it seizes and releases an article. The program means includes a plurality of motion-control program recordings, sensing means therefor and control means responsive to said sensing means for determining the operation of the drive mechanism. A particular portion of the motion-control program recordings is rendered effective to cause the article holder to move through a path corresponding to the sensed characteristic of the article.

In practice it is desirable that a programming unit be capable of preparing and storing several dozen or more programs, and that the robot control unit be capable of storing several different programs semi-permanently.

It is thus an object of the present invention to provide a robot control apparatus which will meet the foregoing requirements and which has a construction optimum for practical use, and it is a further object of the present invention to provide a method of easily correcting the operational positions of an industrial robot without correcting the content of a program.

## SUMMARY OF THE INVENTION

The above object is achieved by a control apparatus and a method for controlling the operation of an industrial robot, said apparatus and method having the features as recited in claims 1 and 5, respectively.

In the control apparatus of the present invention a plurality of necessary programs are inputted from the programming unit, subjected to predetermined arithmetic operations, and then transferred to a robot control unit. In the robot control unit, a desired program is selected and read out of the corresponding memory for controlling the industrial robot to perform desired motions.

Yet further, the invention provides a method for correcting or offsetting a program in a programming unit and storing the corrected program in a robot control unit for separately controlling the programming unit and the robot control unit. The programming unit includes an arithmetic processor for transforming offset inputs supplied in a Cartesian coordinate system to a polar coordinate system for use in a program stored in the robot control unit. Accordingly, data input operations for industrial robots of a polar-coordinate type can easily be performed.

## BRIEF DESCRIPTION OF THE DRAWINGS

Fig. 1 is a block diagram of a first embodiment of control apparatus for an industrial robot according to the present invention;

Fig. 2 is a flowchart for a program preparing procedure;

Fig. 3 is a flowchart for program calling in the program preparing procedure;

Fig. 4 is a flowchart for a storage procedure at the time of transferring a program;

Fig. 5 is a block diagram of a second embodiment of a control apparatus for an industrial robot according to the present invention used to perform a method for program correction of the invention; and

Fig. 6 is a flowchart for a program correcting method of the invention.

## DESCRIPTION OF THE PREFERRED EMBODIMENTS

The present invention will now be described with reference to the drawings which illustrate a preferred embodiment of the invention.

Fig. 1 shows a control apparatus 1 for an industrial robot according to the present invention. The control apparatus 1 is composed of an independent programming unit 2 and a robot control unit 3 which are interconnected by a detachable communication cable 4.

The programming unit 2 serves to prepare and store a number of desired operating programs and deliver a requested one of the stored operating programs to the robot control unit 3. The programming unit 2 includes an input device 5 such as a keyboard for inputting program data, mode instructions, offset (positional correction) data, and other inputs; a program editing arithmetic processor 6 in the form of a CPU (Central Processing Unit) including a control unit, an arithmetic unit and a register for storing processing programs (which include editing programs, coordinate transformation formulas, offset processing programs, and a compiling program for converting programs to machine language), editing the operating programs based on input data from the keyboard 5, and performing operations such as coordinate transformation and conversion into machine language; a memory 7 in the form of a RAM (Random Access Memory) for temporarily storing data related to the operating programs, coordinate transformation formulas, and a compiling program; an external memory 8 having a large storage capacity such as a magnetic tape or a magnetic disk for storing a multiplicity of edited operating programs; a display unit 9 for displaying input and stored data; and a communication circuit 10 for delivering processed (completed) operating programs through the program editing arithmetic processor 6 to the robot control unit 3.

The robot control unit 3 is specifically adapted to control the operation of an industrial robot 20 of the polar-coordinate type. The operation control apparatus 2 is composed of a communication circuit 11 for receiving processed operating programs transferred from the programming apparatus 3; a plurality of operating program memories 12, 13, ...16 (five memories in the illustrated embodiment) for storing a plurality of computed operating programs delivered from the communication circuit 11; a selector unit 17 for connecting data buses as needed to select writing or reading of the operating programs; a robot operation control unit 18 for generating the signals which cause the industrial robot 20 to perform the required motions; and a mode setting circuit 19 for setting a desired operation mode for the selector unit 17 and the robot operation control unit 18.

Each of the operating program memories 12, 13, ...16 is composed of a RAM and an auxiliary power supply or battery which will automatically be connected to the RAM upon failure of the commercial power source so that the stored content of the RAM will be protected at all times against accidental erasure.

The selector unit 17 can be controlled by the mode setting circuit 19 and also by a detector circuit 21. The detector circuit 21 receives a signal from an external sensor 22 and operates the selector unit 17 in accordance with received signal. The sensor 22 may be composed, for example, of a group of limit switches engagable with dogs attached to an object handled by the industrial robot 20 for determining the type of object. The robot operation control unit 18 has a control circuit 23, an external input and output control circuit 24, and a robot drive circuit 25.

When the operator selects a continuous operation mode using the mode setting circuit 19, the control circuit 23 enables the selector circuit 17 to deliver the stored content of a designated one the operating program memories 12, 13, ...16, that is, a desired operating program is inputted to the robot drive circuit 25. The external input and output control circuit 24 is responsive to motions of the robot 20 for detecting its operations and positions with limit switches, encoders or the like and for delivering data representative of the operations and positions to the control circuit 23. The robot drive circuit 25 receives signals from the external input and output control circuit 24 based on the content of the selected operating program and, in response thereto, confirms such signals and successively sends command signals to the industrial robot 1 for causing the desired motions.

Operation of the control apparatus thus constructed will now be described. The programmer operates the input device 5 to supply input data such as operational positions of the industrial robot 20 (in Cartesian coordinates and an angular displacement for a chuck) and external input conditions according to a predetermined program preparation procedure, based on a PTP (Point-To-Point) control system, for example, in which continuous path control is carried out. The inputted data is temporarily stored in the memory 7 through operation of the program editing arithmetic processer 6 and then stored in completed form in the external memory 8 at specified addresses. During this time, the display unit 9 displays the stored content or selected portions thereof. Since the storage capacity of the external memory 8 is large enough to store a number of programs, it can store as many programs as are expected to be needed. When the programming unit 2 is to deliver an operating program stored in the external memory 8 to the robot control unit 3, the programming unit 2 and the robot control unit 3 are interconnected as an on-line system, and thereafter a required operating program is read temporarily from the external memory 8 into the memory 7 utilizing an input program transfer operation. Then, the program editing arithmetic processer 6 converts the content of the memory 8 into polar coordinates and then into machine language through predetermined arithmetic operations.

The data expressed in machine language is fed through the communication circuit 10 and the communication cable 4 to the communication circuit 11 in the robot control unit 3. At this time, the robot control unit is set in an operating program storing mode by the mode setting circuit 19, with the selector unit 17 operated to designate addresses for data storage. A completed operating program is stored through the selector unit 17 into the first operating program memory 12, for example. In this manner, the robot control unit 3 can store five operating programs. Since the program memories 12, 13, ...16 are composed of RAMs as described above, they can store rewritten data as desired.

Subsequently, the programming unit 2 is disconnected from the robot control unit 3, whereupon the robot control unit 3 can operate independently of the programming unit 2. The operator can then control the mode setting means 19 to cause the selector unit 17 to read a desired operating program out of the stored content of the operation program memory 16, for example. Such a program reading instruction can also be automatically effected by the detector circuit 21 in response to a signal from the sensor 22.

The control circuit 23 reads the designated operating program and, in response thereto, enables the robot drive circuit 25 to energize a source of drive for driving the arm of the industrial robot 1. At the same time, the control circuit 23 receives signals from the external input and output control circuit 24 indicative of the movement of the industrial robot 20. The control circuit 23 then continuously operates the industrial robot 20 under the control of the selected operating program.

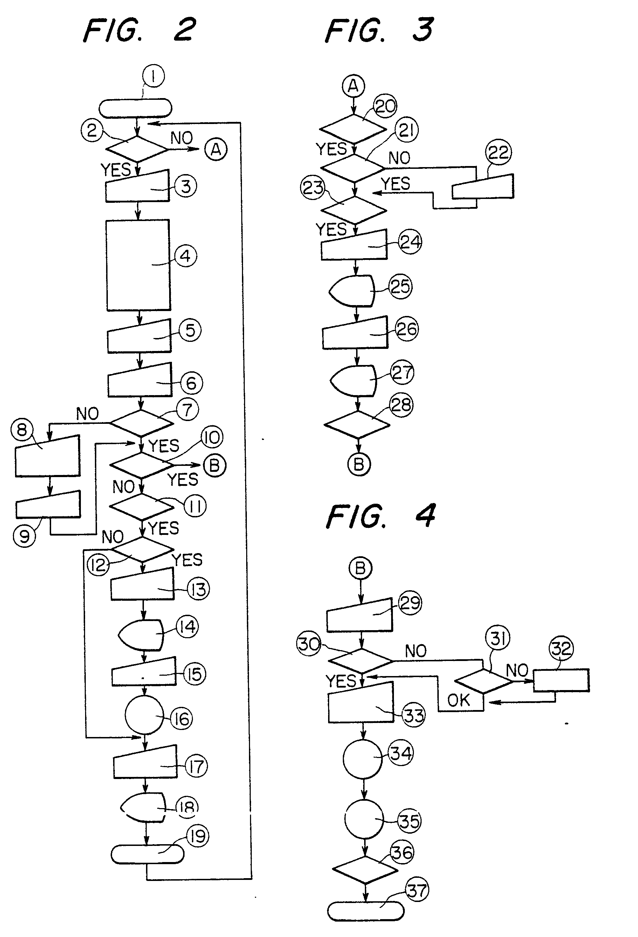

Figs. 2 through 4 illustrate, respectively, procedures for preparing, calling and transferring a program. These procedures will now be described.

After a Start Step 1, it is determined in a Step 2 if a program is to be prepared. If a program is to be prepared, then the keyboard of the input device 5 is operated to instruct a program preparation at a Step 3. The programmer feeds various inputs at a Step 4 while in conversation with the memory 7 according to a predetermined program preparation procedure. The inputs include the title of the program, the type of the robot, designation of points on a plane coordinate system, data related to an external operation, data indicative of arm movements, and others. These inputs are edited and temporarily stored in the memory 7. When the programmer calls up an error check in Step 6 after completion of the data input operation has been indicated, it is determined at a Step 7 whether there is an error or not. If there is any error, then such an error is located at a Step 8 and corrected at a Step 9. Then, it is determined at a Step 10 whether the program data is to be transferred, and at a Step 11 whether the program data is to be stored in the external memory. If the program data is to be stored, then the program goes to a connector B. If the program data is to be stored in the external memory 8, then it is determined at a Step 12 whether the storage medium is a raw (unrecorded) tape. If it is a raw tape, then a recording address is designated at a Step 13 and thereafter a confirmation message is displayed at a Step 14. By performing a confirmation instruction at a Step 15, initialization or recording of an address zone is performed at a Step 16. If the storage medium is not found to be a raw tape in the Step 12, then a recording position is directly indicated at a Step 17. The program preparation is finished at a Step 19 after the title of the program has been displayed at a Step 18. The programmer repeats the foregoing operations as many times as there are programs to be prepared.

If no program is to be prepared at the Step 2 then the program goes to a connector A. It is then determined at a Step 20 whether the program is to be transferred at a Step 21 whether there is a magnetic tape, and at a Step 23 whether a file is to be checked. If there is no magnetic tape, then the program goes to the Step 23 after a cartridge has been inserted in place at a Step 22. Then, when the programmer designates a file at a Step 24, the file can be confirmed by an index display 25. When the title of the program is indicated at a Step 26, the stored content of the external memory 8 is temporarily read into the memory 7, and the title of the program is displayed at a Step 27. After it has been determined at a Step 28 whether the program is to be transferred, the program goes to the connector B.

When the program reaches the connector B, that is, when the program is to be transferred, it is determined at a Step 30 whether the robot is ready after the units 2 and 3 have been connected into an on-line system. If the robot is not ready, then the power supply status, mode setting and other relevant parameters in the robot control unit 3 are confirmed in a Step 31, and the operator effects required operations at a Step 32. Thereafter, a memory number in the robot control unit 3 is designated at a Step 33. The program as called is processed and transferred in a Step 34, and delivered to a designated one of the program memories 12, 13, ...16 in the robot control unit 3. The program memory 12, for example, stores the content of the program at a Step 35. Finally, it is determined at a Step 36 whether there is any error. The procedure is ended at a Step 37.

Since, according to the present invention, the programming unit and the robot control unit are independent of each other, the robot control unit is simple in construction and small in size. The programming unit can be combined with the robot control unit in an on-line system for storing a program in an arrangement known as an external robot teaching system for allowing the programming unit to be shared by many robot control units. While a program is being stored, there is no need to stop the operation of the industrial robot. Therefore, the availability of the robot is not reduced. Since the storage capacity of the robot control unit is large and there are a plurality of program memories in the robot control unit, a plurality of programs can be stored, with the results that the industrial robot has wider range of use and can perform a sufficient number of functions. Since the stored data can always be supplied from the external memory, the industrial robot can readily perform every required motion. Moreover, with the contents of the programs selected by the operation of the mode setting means and the selector unit in the robot control unit, the content of a required program can be prepared independently of the programming unit.

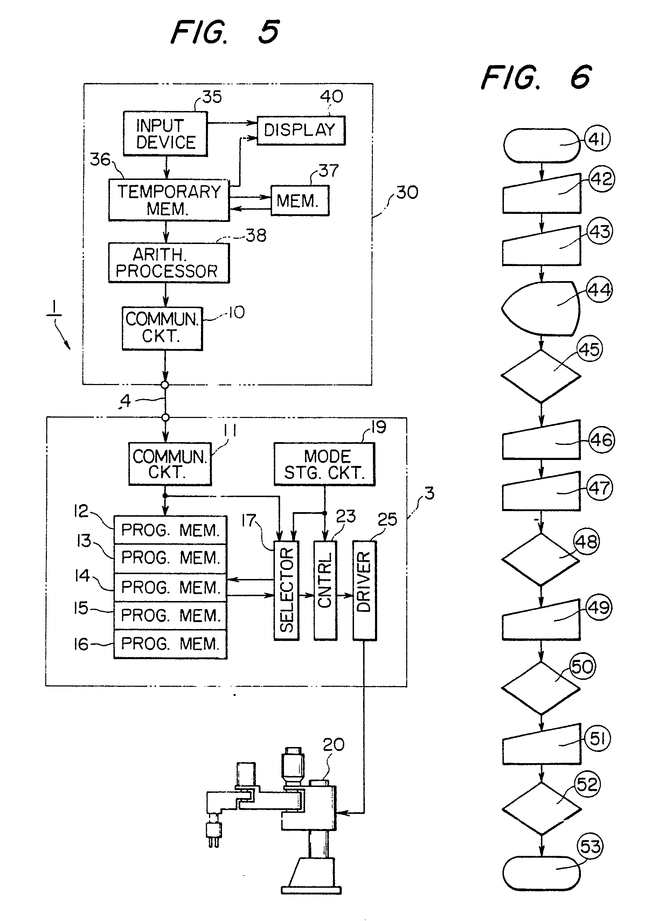

A second embodiment of a control apparatus 1 for an industrial robot of the invention is shown in Fig. 5, in which like reference numbers designate similar elements in Fig. 1. As in the first described embodiment, the control apparatus 1 is composed of a programming unit 30 and a robot control unit 3 which are constructed as separate units but which can be connected to each other by a communication cable 4.

The programming unit 30 has a control input device 35 such as a keyboard having ten numeric keys and function keys; a temporary memory 6 such as a RAM; a memory 7 such as a magnetic disk or a magnetic tape; an arithmetic processor 8 for storing a processing program and effecting various arithmetic operations for correction, coordinate transformation, and conversion into machine language; a communication circuit 10 serving as a transmitter and receiver for transmitting and receiving programs and data to and from the robot control unit 37; and a display unit 40 for displaying various data.

The robot control unit 3 is constructed in the same manner as in the embodiment of Fig. 1. Here it is assumed that the robot control unit 3 is of the polar coordinate type; that is, it operates using control data specified in polar coordinate form for controlling the movements of the industrial robot 3.

In operation, the programmer operates the control input device 35 while watching the image displayed by the display unit 40 to store a desired program in the temporary memory 36. The stored content in the temporary memory 36 is stored at addresses in the memory 37 specific for each completed program. A plurality of programs can thus be stored in the memory 37 for required operating patterns of movement.

When the program of a particular operating pattern is to be transferred to the robot control unit 3, the desired program is transferred into the temporary memory 6 and delivered to the arithmetic processor 8, in which this program is subjected to coordinate transformation and conversion into machine language under the control of the processing program. The resulting program data is supplied through the communication circuit 10 to the communication circuit 11. The coordinate transformation is required to transform the data inputted in Cartesian coordinate form to polar-coordinate form. Such an arithmetic operation function for coordinate transformation permits operational position inputs to be supplied easily through the input device without the programmer having to manually or separately convert the data.

Prior to program transfer, the robot control unit 3 is set in a transfer mode by the mode setting circuit 19. The selector 17 may select the memory 13, for example, for receiving the transferred program. The content of the program received through the communication circuit 12 is delivered into the memory 13 in which the program is stored. A plurality of operating pattern programs are similarly stored in the other memories 12, 15, ...16.

When it is desired to make a positional correction or offset due to a change of a rod part, for example, without changing the operating pattern, the mode setting circuit 19 in the robot control unit 3 is operated to set the latter for a programming mode. Then, program correction process according to the present invention is carried out as illustrated in Fig 6.

After a Start Step 41, the programmer inserts a magnetic tape cartridge at a Step 42 and designates the title of a program at a Step 43. Upon such input operation, the designated program is read out of the memory 37 into the temporary memory 36 in which the program data is tem orarily stored. Simultaneously, the title of the program is displayed on the display unit at a Step 44. Then, it is determined at a Step 45 whether a positional correction or an offset is to be made. The programmer supplies an offset-indicating input at a Step 46 and a correction input for a corrected position at a Step 47. As described above, the correction input can be fed as data expressed in Cartesian coordinates. X and Y data which requires correction of the operational positions in the operating pattern is provided in the form of difference (delta) inputs.

The data indication of the corrected positions is temporarily stored in the temporary memory 36 and displayed on the display unit 40 at the same time. Since the operating pattern remains unchanged, the program itself is not changed and only numerical values used by the program are varied. Subsequently, it is determined at a Step 48 whether the program is to be transferred. If the program is to be transferred, then the operator connects the programming unit 30 and the robot control unit 3 through the communication cable 4 to unite the units 2 and 30 as an on-line system at a Step 49. It is then determined at a Step 50 whether the robot is ready or not, and thereafter the operator operates the control input device 35 to designate a storage address in the robot control unit 3 at a Step 51. When the storage address is designated at the Step 51, the arithmetic processor 38 corrects the content or data of the given program, and the corrected data is subjected to coordinate transformation and converted into machine language. The corrected program is then transferred through the communication circuits 10 and 11. The robot control unit 3 accepts the corrected program and stores it in the designated memory, for instance, the memory 13. At this time, it is determined at a Step 52 whether there is an error. The corrective action is finished at a final Step 53. When the corrected program is read while in an operation mode, the industrial robot 20 repeats its motions in a desired operating pattern at the corrected position based on the data of the corrected program.

While in the foregoing embodiment corrected data is described as being manually supplied through the control input device 35, such corrected input data can also automatically be fed by an automatic measuring device. The automatic measurement can be carried out by providing a photoelectric sensor at a reference position, detecting the position of an object to be worked upon with the photoelectric sensor, and converting the detected signal into a digital signal which is supplied to the temporary memory 36. The reference position may be selected outside of the industrial robot 20 or it may be on the arm of the industrial robot 20.

With the method of program correction according to the present invention, no basic operating program is required to be corrected in the program unit, and only data related to operational positions used in the operating program need be corrected. Thus, the basic program remains unaltered. Any positional correction can easily be carried out by only partial correction. The program and data subsequent to correction are transferred to the robot control unit and stored therein, so that no arithmetic operation is required in the robot control unit for correction or offset each time a robot movement is effected. Accordingly, the control sequence can be simplified and the robot operation can be performed at a high speed.

**Claims**

1. A control apparatus for an industrial robot, comprising a programming unit (2) and a robot control unit (3), wherein:

- said programming unit (2) comprises a program editing arithmetic processor (6), data inputting means (5) for inputting data to said program editing arithmetic processor (6), a temporary memory (7) coupled to said program editing arithmetic processor (6) for storing a program prior to processing, and first communicating circuit means (10) for transmitting programs outputted through said program editing arithmetic processor (6) to said robot control unit (3); and

- said robot control unit (3) comprises second communication circuit means (11) for receiving processed programs from said first communicating circuit means (10) of said programming unit (2), characterized in that

- said programming unit (2) further comprises a second memory (8) communicated with said temporary memory (7) and said program editing arithmetic processor (6) for storing a plurality of programs for operating said industrial robot, and

- said robot control unit (3) further comprises a plurality of program memories (12-16) each of which is capable of storing a single program for operating said industrial robot (20), selecting means (17) for routing programs communicated through said second communicating circuit (11) to a designated one of said program memories (12-16) and for selectively reading programs out of a designated one of said program memories (12-16), a robot operation control unit (18) for controlling operations of said industrial robot (20) in accordance with a program read out by said selecting means (17) from a selected one of said program memories (12-16), and mode setting means (19) for operating said selecting means (17) and said robot operation control means (18), wherein said mode setting means (19) can selectively set said selecting means (17) and said robot operation control means (18) in a mode for receiving and storing programs to receive processed programs from said programming unit (2) for storing processed programs in said program memories (12-16) and in a continuous operation mode for reading out a selected program from a designated one of said program memories (12-16) for causing said robot control unit (3) to control operations of said industrial robot (20) in accordance with said selected program.

2. The control apparatus of claim 1, further comprising a detachable cable (4) for detachably connecting said first communicating circuit means (10) and said second communicating circuit means (11).

3. The control apparatus of claim 1, further comprising a sensor (22) external to the robot control unit (3) for sensing a predetermined parameter of a workpiece; and detecting means (21) in said robot control unit (3) coupling an output of said external sensor (22) to said selecting means (17) for causing said selecting means (17) to select an operating program for said industrial robot in accordance with an output of said external sensor (22).

4. The control apparatus of claim 3, wherein said external sensor (22) comprises a group of limit switches engagable with dogs attached to a workpiece handled by said industrial robot for determining a type of said workpiece.

5. A method of controlling the operation of an industrial robot (20) through an industrial robot control apparatus including a programming unit (2) and a robot control unit (3) detachably coupled to said programming unit (2), wherein the programming unit (2) comprises an arithmetic processor (6), data inputting means (5) for inputting data to said arithmetic processor (6), a temporary memory (7) coupled to said arithmetic processor (6), and a second memory (8) coupled to said arithmetic processor (6) through said temporary memory (7) for storing a plurality of programs for operating said industrial robot and said robot control unit (3) comprises a program memory (12-16) for receiving and storing programs transferred from said programming unit (2), and means (23) for controlling the movement of said industrial robot (20) in accordance with a selected program read out from said program memory (12-16), comprising the steps of: transferring position control data from a selected program from said second memory (8) to said temporary memory (7); inputting data representative of corrective values through said data inputting means (5); processing said data from said selected program and said data inputted through said data inputting means (5) in said arithmetic processor (6) to provide corrected program data; transmitting said corrected program data from said arithmetic processor (6) to said program memory (12-16) of said robot control unit (3); receiving and storing said corrected program data in said program memory (12-16) of said robot control unit (3); and operating said industrial robot (20) in accordance with the corrected program data.

6. The method of claim 5, wherein said data inputted through said data inputting means (5) is in Cartesian coordinates, and wherein said step of processing comprises converting said data inputted through said inputting means (5) in Cartesian coordinates into polar coordinates so that said corrected program data communicated to said robot control unit (3) is in polar coordinates.

7. The method of claim 6, wherein said programming unit (2) comprises displaying means (9) coupled to said inputting device (5) and said temporary memory (7), and further comprising the step of displaying data on said displaying means (9) inputted through said inputting means (5) and data stored in said temporary memory (7).

8. The method of anyone of claims 5 to 7, further comprising the step of: inputting data through said data inputting means for selecting a program stored in said second memory (8) for causing said selected program to be read from said second memory (8) into said temporary memory (7); displaying data identifying said selected program on said displaying means; determining whether a positional correction or an offset is to be effected in said selected program; supplying one of an offset-indicating input and a correction input in accordance with the result of the step of determining whether a positional correction or an offset is to be made in Cartesian coordinate form and in the form of differences; changing numerical values in said selected program representing an operating pattern of said industrial robot (20) in accordance with said data inputted into said temporary memory (7) using said arithmetic processor (6); simultaneously, displaying data indicative of corrected positions on said display means (9); transferring a corrected program from said arithmetic processor (6) to said robot control unit (3); and operating said industrial robot (20) in accordance with said corrected program.

## Patentansprüche

1. Steuergerät für einen industriellen Roboter mit einer Programmiereinheit (2) und einer Robotersteuereinheit (3), wobei:

- die Programmiereinheit (2) einen Programmaufbereitungs-Rechenprozessor (6), eine Dateneingabeeinrichtung (5) zum Eingeben von Daten in den Programmaufbereitungs-Rechenprozessor (6), einen mit dem Programmaufbereitungs-Rechenprozessor (6) gekoppelten Zwischenspeicher (7) zum Speichern eines Programmes vor einer Verarbeitung und eine erste Kommunikationsschaltungseinrichtung (10) zum Übertragen von durch den Programmaufbereitungs-Rechenprozessor (6) ausgegebenen Programmen zur Robotersteuereinheit (3) aufweist und

- die Robotersteuereinheit (3) eine zweite Kommunikationsschaltungseinrichtung (11) zum Empfangen verarbeiteter Programme von der ersten Kommunikationsschaltungseinrichtung (10) der Programmiereinheit (2) hat, dadurch gekennzeichnet, daß

- die Programmiereinheit (2) weiterhin einen mit dem Zwischenspeicher (7) und dem Programmaufbereitungs-Rechenprozessor (6) kommunizierenden zweiten Speicher (8) zum Speichern einer Vielzahl von Programmen zum Betreiben des industriellen Roboters hat, und

- die Robotersteuereinheit (3) weiterhin eine Vielzahl von Programmspeichern (12-16), deren jeder ein einziges Programm zum Betreiben des industriellen Roboters (20) speichern kann, eine Wähleinrichtung (17) zum Leiten von durch die zweite Kommunikationsschaltung (11) übertragenen programmen zu einem bezeichneten Speicher der Programmspeicher (12-16) und zum wahlweisen Auslesen von einem bezeichneten Programmspeicher der Programmspeicher (12-16), eine Roboteroperationssteuereinheit (18) zum Steuern von Operationen des industriellen Roboters (20) gemäß einem durch die Wähleinrichtung (17) aus einem der Programmspeicher (12-16) ausgewählten programm und eine Betriebsart-Einstelleinrichtung (19) zum Betreiben der Wähleinrichtung (17) und der Roboteroperationssteuereinrichtung (18) aufweist, wobei die Betriebsart-Einstelleinrichtung (19) wahlweise die Wähleinrichtung (17) und die Roboteroperationssteuereinrichtung (18) in eine Betriebsart zum Empfangen und Speichern von Programmen einstellen kann, um verarbeitete Programme von der Programmiereinheit (2) zum Speichern verarbeiteter Programme in den Programmspeichern (12-16) zu empfangen und um in einer kontinuierlichen Betriebsart ein gewähltes Programm aus einem bezeichneten Programmspeicher der Programmspeicher (12-16) auszulesen, damit die Robotersteuereinheit (3) veranlaßt wird, Operationen des industriellen Roboters (20) gemäß dem gewählten Programm zu steuern.

2. Steuergerät nach Anspruch 1, mit weiterhin einem lösbaren Kabel (4) zum lösbaren Verbinden der ersten Kommunikationsschaltungseinrichtung (10) und der zweiten Kommunikationsschaltungseinrichtung (11).

3. Steuergerät nach Anspruch 1, weiterhin mit einem außerhalb der Robotersteuereinheit (3) vorgesehenen Sensor (22) zum Erfassen eines vorbestimmten Parameters eines Werkstückes und einer Detektoreinrichtung (21) in der Robotersteuereinheit (3), die ein Ausgangssignal des außerhalb angeordneten Sensors (22) mit der Wähleinrichtung (17) koppelt, um die Wähleinrichtung (17) zu veranlassen, ein Betriebsprogramm des industriellen Roboters entsprechend einem Ausgangssignal des außerhalb angeordneten Sensors (22) zu wählen.

4. Steuergerät nach Anspruch 3, bei dem der außerhalb angeordnete Sensor (22) eine Gruppe von Grenzschaltern hat, die in an einem durch den industriellen Roboter behandelten Werkstück angebrachte Klauen oder Klinken eingreifen, um eine Art des Werkstückes zu bestimmen.

5. Verfahren zum Steuern des Betriebs eines industriellen Roboters (20) durch ein Steuergerät für einen industriellen Roboter, mit einer Programmiereinheit (2) und einer lösbar mit der Programmiereinheit (2) gekoppelten Robotersteuereinheit (3), wobei die Programmiereinheit (2) einen Rechenprozessor (6), eine Dateneingabeeinrichtung (5) zum Eingeben von Daten in den Rechenprozessor (6), einen mit dem Rechenprozessor (6) gekoppelten Zwischenspeicher (7) und einen mit dem Rechenprozessor (6) über den Zwischenspeicher (7) gekoppelten zweiten Speicher (8) zum Speichern einer Vielzahl von Programmen zum Betreiben des industriellen Roboters hat und die Robotersteuereinheit (3) einen programmspeicher (12-16) zum Empfangen und Speichern von von der Programmiereinheit (2) übertragenen programmen und eine Einrichtung (23) zum Steuern der Bewegung des industriellen Roboters (20) entsprechend einem aus dem programmspeicher (12-16) ausgelesenen gewählten Programm aufweist, mit den Verfahrensschritten: Übertragen von Positionssteuerdaten von einem gewählten Programm von dem zweiten Speicher (8) zum Zwischenspeicher (7), Eingeben von Korrekturwerte darstellenden Daten durch die Dateneingabeeinrichtung (5), Verarbeiten der Daten von dem gewählten Programm und der durch die Dateneingabeeinrichtung (5) in den Rechenprozessor (6) eingegebenen Daten, um korrigierte Programmdaten zu liefern, Senden der korrigierten Programmdaten von dem Rechenprozessor (6) zu dem programmspeicher (12-16) der Robotersteuereinheit (3), Empfangen und Speichern der korrigierten Programmdaten im Programmspeicher (12-16) der Robotersteuereinheit (3) und Betreiben des industriellen Roboters (20) gemäß den korrigierten Programmdaten.

6. Verfahren nach Anspruch 5, bei dem die durch die Dateneingabeeinrichtung (5) eingegebenen Daten in Cartesischen Koordinaten vorliegen und bei dem der Verarbeitungsschritt ein Umsetzen der durch die Eingabeeinrichtung (5) in Cartesischen Koordinaten eingegebenen Daten in Polarkoordinaten umfaßt, so daß die mit der Robotersteuereinheit (3) kommunizierenden korrigierten Programmdaten in Polarkoordinaten vorliegen.

7. Verfahren nach Anspruch 6, bei dem die programmiereinheit (2) eine mit der Eingabeeinrichtung (5) und dem Zwischenspeicher (7) gekoppelte Anzeigeeinrichtung (9) umfaßt, und weiterhin mit dem Schritt des Anzeigens von durch die Eingabeeinrichtung (5) eingegebenen Daten und von in dem Zwischenspeicher (7) gespeicherten Daten auf der Anzeigeeinrichtung (9).

8. Verfahren nach einem der Ansprüche 5 bis 7, mit weiterhin dem Schritt: Eingeben von Daten durch die Dateneingabeeinrichtung, um ein im zweiten Speicher (8) gespeichertes programm zu wählen, damit das gewählte Programm dazu veranlaßt wird, aus dem zweiten Speicher (8) in den Zwischenspeicher (7) gelesen zu werden, Anzeigen von Daten, die das gewählte Programm identifizieren, auf der Anzeigeeinrichtung, Bestimmen, ob eine Lagekorrektur oder eine Versetzung in dem gewählten Programm zu bewirken ist, Einspeisen eines Eingangssignales von einem Versetzungsanzeige-Eingangssignal und einem Korrektureingangssignal entsprechend dem Ergebnis der Bestimmung, ob eine Lagekorrektur oder eine Versetzung vorzunehmen ist, in Cartesischer Koordinatenform oder in der Form von Differenzen, Ändern numerischer Werte in dem gewählten Programm, das ein Betriebsmuster des industriellen Roboters (20) darstellt, gemäß den in den Zwischenspeicher (7) eingegebenen Daten mittels des Rechenprozessors (6), gleichzeitiges Anzeigen von korrigierte Lagen angebenden Daten auf der Anzeigeeinrichtung (9), Übertragen eines korrigierten Programmes vom Rechenprozessor (6) zur Robotersteuereinheit (3) und Betreiben des industriellen Roboters (20) entsprechend dem korrigierten Programm.

## Revendications

1. Appareil de commande pour un robot industriel, comportant une unité de programmation (2) et une unité de commande de robot (3), dans lequel:

- ladite unité de programmation (2) comporte un processeur arithmétique de montage de programme (6), un dispositif d'introduction de données (5) pour introduire des données dans ledit processeur arithmétique de montage de programme (6), une mémoire temporaire (7) couplée avec ledit processeur arithmétique de montage de programme (6) pour mémoriser un programme avant son traitement et un premier circuit de communication (10) destiné à transmettre des programmes émis par ledit processeur arithmétique de montage de programme (6) vers ladite unité de commande de robot (3); et

- ladite unité de commande de robot (3) comporte un second circuit de communication (11) destiné à recevoir des programmes traités provenant dudit premier circuit de communication (10) de ladite unité de programmation (2), caractérisé en ce que

- ladite unité de programmation (2) comporte en outre une seconde mémoire (8) qui communique avec ladite mémoire temporaire (7) et ledit processeur arithmétique de montage de programme (6) pour mémoriser plusieurs programmes de commande dudit robot industriel, et

- ladite unité de commande de robot (3) comporte en outre plusieurs mémoires de programme (12-16) dont chacune peut mémoriser en seul programme pour commander ledit robot industriel (20), un dispositif de sélection (17) destiné à aiguiller des programmes communiqués par l'intermédiaire dudit second circuit de communication (11) vers l'une spécifiée desdites mémoires de programme (12-16) et pour lire sélectionnement des programmes dans l'une spécifiée desdites mémoires de programme (12-16), une unité de commande de fonctionnement de robot (18) qui commande les opérations dudit robot industriel (20) en fonction d'un programme lu par ledit dispositif de sélection (17) dans l'une sélectionnée desdites mémoires de programme (12-16) et un dispositif de réglage de mode (19) destiné à commander ledit dispositif de sélection (17) et lesdits dispositifs de commande de fonctionnement de robot (18), dans lequel ledit dispositif de réglage de mode (19) peut mettre en place sélectivement ledit dispositif de sélection (17) et ledit dispositif de commande de fonctionnement de robot (18) dans un mode pour recevoir et mémoriser des programmes, afin de recevoir des programmes traités provenant de ladite unité de programmation (2), pour mémoriser des programmes traités dans lesdites mémoires de programme (12-16) et dans un mode de fonctionnement continu pour lire un programme sélectionné dans l'une spécifiée desdites mémoires de programme (12-16) afin que ladite unité de commande de robot (3) commande les opérations dudit robot industriel (20) en fonction dudit programme sélectionné.

2. Appareil de commande selon la revendication 1, comportant en outre un câble amovible (4) destiné à connecter de façon amovible ledit premier circuit de communication (10) et ledit second circuit de communication (11).

3. Appareil de commande selon la revendication 1, comportant en outre un capteur (22) extérieur à l'unité de commande de robot (3) pour détecter un paramètre prédéterminé d'une pièce à usiner; et un dispositif de détection (21) dans ladite unité de commande de robot (3) couplant une sortie dudit capteur extérieur (22) avec ledit dispositif de sélection (17) pour que ledit dispositif de sélection (17) sélectionne un programme de commande dudit robot industriel en fonction d'une sortie dudit capteur extérieur (22).

4. Appareil de commande selon la revendication 3, dans lequel ledit capteur extérieur (22) consiste en un groupe de commutateurs de limite pouvant être engagés par des taquets fixés sur une pièce à usiner manipulée par ledit robot industriel afin de déterminer un type de ladite pièce à usiner.

5. Procédé de commande du fonctionnement d'un robot industriel (20) au moyen d'un appareil de commande de robot industriel comportant une unité de programmation (2) et une unité de commande de robot (3) couplée de façon amovible avec ladite unité de programmation (2), dans lequel l'unité de programmation (2) comporte un processeur arithmétique (6), un dispositif d'introduction de données (5) pour introduire des données dans ledit processeur arithmétique (6), une mémoire temporaire (7) couplée avec ledit processeur arithmétique (6) et une seconde mémoire (8) couplée avec ledit processeur arithmétique (6) par l'intermédiaire de ladite mémoire temporaire (7) afin de mémoriser plusieurs programmes de commande dudit robot industriel et ladite unité de commande de robot (3) comportant une mémoire de programme (12-16) pour recevoir et mémoriser des programmes transférés depuis ladite unité de programmation (2) et un dispositif (23) de commande du mouvement dudit robot industriel (20) en fonction d'un programme sélectionné lu dans ladite mémoire de programme (12-16), consistant: à transférer des données de commande de position depuis un programme sélectionné dans ladite seconde mémoire (8) vers ladite mémoire temporaire (7); à introduire des données représentant des valeurs correctives par ledit dispositif d'introduction de données (5); à traiter lesdites données provenant dudit programme sèlectionné et lesdites données introduites par ledit dispositif d'introduction de données (5) dans ledit processeur arithmétique (6) afin de produire des données de programme corrigées; à transmettre lesdites données de programme corrigées depuis ledit processeur arithmétique (6) vers ladite mémoire de programme (12-16) de ladite unité de commande de robot (3); à recevoir et à mémoriser lesdites données de programme corrigées dans ladite mémoire de programme (12-16) de ladite unité de commande de robot (3); et à commander ledit robot industriel (20) en fonction des données de programme corrigées.

6. Procédé selon la revendication 5, dans lequel lesdites données introduites par ledit dispositif d'introduction de données (5) sont en coordonnées cartésiennes et dans lequel ledit traitement consiste à convertir lesdites données introduites par ledit dispositif d'introduction (5) en coordonnées cartésiennes sous forme de coordonnées polaires de manière que lesdites données de programmes corrigées communiquées à ladite unité de commande de robot (3) soient en coordonnées polaires.

7. Procédé selon la revendication 6, dans lequel ladite unité de programmation (2) comporte un dispositif d'affichage (9) couplé avec le dispositif d'introduction (5) et ladite mémoire temporaire (7) et consistant en outre à afficher des données sur ledit dispositif d'affichage (9), introduites par ledit dispositif d'introduction (5) et des données mémorisées dans ladite mémoire temporaire (7).

8. Procédé selon l'une quelconque des revendications 5 à 7, consistant en outre: à introduire des données par ledit dispositif d'introduction de données afin de sélectionner un programme mémorisé dans ladite seconde mémoire (8) pour que ledit programme sélectionné soit lu dans ladite seconde mémoire (8) dans ladite mémoire temporaire (7); à afficher des données identifiant ledit programme sélectionné sur ledit dispositif d'affichage; à déterminer si une correction ou un décalage de position doit être effectuè dans ledit programme sélectionné; à fournir l'une d'une entrée indicatrice de décalage et une entrée de correction en fonction du résultat de la détermination si une correction ou un décalage de position doit être effectué sous forme de coordonnées cartésiennes et sous la forme de différences; à changer des valeurs numériques dans ledit programme sélectionné, représentant une configuration de commande dudit robot industriel (20) en fonction desdites données introduites dans ladite mémoire temporaire (7) en utilisant ledit processeur arithmétique (6); à afficher simultanément des données indiquant les positions corrigées sur ledit dispositif d'affichage (9); à transférer un programme corrigé depuis ledit processeur arithmétique (6) vers ladite unité de commande de robot (3); et à commander ledit robot industriel (20) en fonction dudit programme corrigé.

# FIG. 1

FIG. 2

FIG. 3

FIG. 4

# FIG. 5

# FIG. 6